# EUROPÄISCHE PATENTSCHRIFT

(11) **EP 3 197 731 B1**
(45) Veröffentlichungstag und Bekanntmachung des Hinweises auf die Patenterteilung: **27.11.2019**
(21) Anmeldenummer: 15747795.1
(22) Anmeldetag: 04.08.2015
(51) Int. Cl.: B60T 8/36, F16K 31/06

(54) **MAGNETVENTIL FÜR EIN FAHRZEUGBREMSSYSTEM**
SOLENOID VALVE FOR A VEHICLE BRAKING SYSTEM
ÉLECTROVANNE DESTINÉE AU SYSTÈME DE FREINAGE D'UN VÉHICULE

(30) Priorität: 23.09.2014 DE 102014219183
(43) Veröffentlichungstag der Anmeldung: 02.08.2017
(73) Patentinhaber: Robert Bosch GmbH, 70442 Stuttgart (DE)
(72) Erfinder: LECHLER, Andreas, 71696 Moeglingen (DE); NORBERG, Jens, 70437 Stuttgart (DE); HAAS, Martin, 71720 Oberstenfeld (DE)
(86) Internationale Anmeldenummer: PCT/EP2015/067945
(87) Internationale Veröffentlichungsnummer: WO 2016/045850

(56) Entgegenhaltungen:
- JP-A- S5 937 384
- US-B1- 6 187 459

## Beschreibung

Die Erfindung geht aus von einem Verfahren zum Heizen eines Magnetventils für ein Fahrzeugbremssystem nach der Gattung des unabhängigen Patentanspruchs 1. Zudem betrifft die Erfindung ein Fahrzeugbremssystem mit mindestens einem Magnetventil, welches mit einem solchen Verfahren beheizt wird.

In bekannten Fahrzeugbremssystemen mit ABS/ESP-Funktionalität (ABS: Antiblockiersystem, ESP: Elektronisches Stabilitätsprogramm) werden so genannte als Magnetventile ausgeführte Einlassventile eingesetzt, welche bei Regelvorgängen, wie beispielsweise einer ABS-Bremsung, den Druckaufbau in einer Radbremszange steuern. Diese Magnetventile umfassen jeweils eine Magnetbaugruppe mit einem Wicklungsträger, einer Spulenwicklung, einem Gehäuse und einer Abdeckscheibe und eine Ventilpatrone mit einer Kapsel, einem mit der Kapsel verbundenen Ventileinsatz, einem innerhalb der Kapsel zwischen einer Geschlossenposition und einer Offenposition axial beweglich geführten Anker mit einem Schließelement und einem mit der Kapsel verbundenen Ventileinsatz mit einem Ventilsitz, wobei das Schließelement und der Ventilsitz ein Ventil ausbilden, um einen Fluidfluss durch die Ventilpatrone einzustellen. Die auf den Wicklungsträger gewickelte Spulenwicklung der Magnetbaugruppe bildet eine elektrische Spule aus, welche über an elektrische Anschlüsse angelegte Steuersignale ansteuerbar ist und eine Magnetkraft erzeugt, welche den Anker gegen die Kraft einer Rückstellfeder bewegt, wobei in einem Heizbetrieb basierend auf den Steuersignalen die Fluidtemperatur innerhalb der Ventilpatrone veränderbar ist. Bei einem voll bestromten Einlassventil wird die hydraulische Verbindung zwischen Hauptbremszylinder und der Radbremszange unterbrochen. Durch die Bestromung wird das Schließelement des Einlassventils in den korrespondierenden Ventilsitz gedrückt, so dass kein Fluid mehr durch das Einlassventil strömen kann. Bei einem solchen Einlassventil handelt es sich um ein stellbares bzw. regelbares Ventil, d.h. es kann nicht nur die Zustände "voll geöffnet" (Offenposition) und "komplett geschlossen" (Geschlossenposition) sondern auch Zwischenstellungen einnehmen. Bei bestimmten ABS-Manövern macht man dennoch von der Möglichkeit Gebrauch, das Einlassventil in einem QS-Betrieb (= Quasi-Schalt-Betrieb) zu betreiben, in welchem es möglichst schnell von der Geschlossenposition in die Offenposition gebracht wird, um möglichst schnell Druck in die Radbremszange zu fördern. Das Magnetventil wird dabei immer wieder für einige Millisekunden geöffnet und wieder geschlossen. So entsteht ein stufenförmiger Druckaufbau in der Radbremszange. Dieser stufenförmige Druckaufbau ist jedoch von der Temperatur abhängig. Das liegt vor allem an der temperaturabhängigen Viskosität der Bremsflüssigkeit. Besonders bei Temperaturen unter 0°C wächst die Viskosität mit fallender Temperatur exponentiell an. Für das Einlassventil bedeutet das, dass sich der Magnetanker des Einlassventils nicht mehr so schnell durch das höher viskose Fluid bewegen kann, so dass es länger dauert, bis das Einlassventil vollständig geöffnet ist. Somit sind die sich ergebenden Druckstufen bei niedrigeren Temperaturen kleiner. Um diesem Effekt entgegen zu wirken, gibt es heute die so genannte "Preheating-Funktionalität". Dabei wird das Ventil bestromt, wenn das Fahrzeug bei niedrigen Außentemperaturen losfährt, wobei als Nebeneffekt das Einlassventil geschlossen wird. Durch das dauerhafte Bestromen wird die Magnetspule aufgeheizt und überträgt die Wärme über den Pfad: Spule-Wicklungsträger-Luftspalt-Kapsel-Fluid-Ankernuten. Erreicht die Wärme das Fluid am Magnetanker, verringert sich dort die Fluidviskosität und der Magnetanker kann sich schneller durch das Fluid bewegen. Bei der bekannten Preheating-Funktionalität ist der Wärmepfad vom Ort der Wärmeentstehung in der Spulenwicklung hin zum Ort des gewünschten Wärmeeintrags in der Ventilpatrone recht lang und durch den Wicklungsträger getrennt, welcher in der Regel als Kunststoffbauteil mit geringem Wärmeleitwert hergestellt ist. Zudem wird die Heizwärme ausschließlich durch ohmsche Verluste in der Spulenwicklung erzeugt.

Aus der JP S59 37384 A ist ein gattungsgemäßes Verfahren zum Heizen eines Magnetventils bekannt. Hierbei wird eine periodische Rechteckimpulsspannung mit einer vorgegebenen Impulsbreite an das Magnetventil angelegt, so dass ein Heizstrom durch die Spulenwicklung fließt und das Magnetventil heizt ohne das Magnetventil zu betätigen.

### Offenbarung der Erfindung

Das erfindungsgemäße Verfahren zum Heizen eines Magnetventils für ein Fahrzeugbremssystem mit den Merkmalen des unabhängigen Patentanspruchs 1 hat demgegenüber den Vorteil, dass die Heizleistung bei Ausführungsformen der vorliegenden Erfindung zu einem erheblichen Anteil durch elektrische Induktion und einhergehende Wirbelströme direkt im Eisenkreis des Magnetventils und nicht wie im Stand der Technik ausschließlich durch ohmsche Verluste in der Spulenwicklung erzeugt wird. Insbesondere die in der Oberfläche des Magnetankers und die in der nichtmagnetischen Kapsel induzierten Wirbelströme heizen unmittelbar das den Magnetanker umgebende Fluid auf. Ein wesentlicher Punkt der vorliegenden Erfindung ist eine von der Standardansteuerung des Magnetventils und damit auch dem bisherigen ohmschen Heizen abweichende elektrische Ansteuerung der Magnetbaugruppe. Statt der bisherigen unipolaren Ansteuerung mittels Pulsweitenmodulation bei hoher Taktfrequenz, meist im Bereich von 4kHz bis 10kHz, kommt jetzt eine bipolare Taktung mit einer deutlich niedrigeren Frequenz zur Anwendung. Während bei der herkömmlichen Preheating-Funktionalität die komplette Heizleistung in der Spule erzeugt wird, wird bei Ausführungsformen der vorliegenden Erfindung nur noch ein kleiner Teil der gesamten Heizleistung in der Spule erzeugt, während ein Vielfaches der Spulenverluste jetzt induktiv direkt im Eisenkreis des Magnetventils entsteht.

Während sich beim ohmschen Heizen mit unipolarer Taktung ein Strom mit großem Gleichanteil einstellt, ergibt sich dabei neben den ohmschen Verlusten in der Spule auch eine erhebliche, für die Anwendung des Heizens unerwünschte Magnetkraft. Die Ansteuerung durch bipolares Takten führt im Gegensatz dazu zu relativ großen Wechselanteilen des Stromes. Der Gleichanteil des Stromes verschwindet bei dieser Art der Ansteuerung vollständig. Die Wechselanteile des Stromes führen zu erheblichen magnetischen Wechselfeldern, welche im Eisenkreis des Magnetventils zu Wirbelströmen führen und damit die flussführenden Eisenteile erwärmen. Abhängig von der konstruktiven Ausführung des Magnetkreises und des Magnetventils wird die Frequenz der bipolaren Ansteuerung einerseits so klein gewählt, dass sich möglichst große Wirbelstromverluste im Eisenkreis und speziell im Magnetanker ergeben. Sofern das Schalten des Magnetventils vermieden werden soll, wird die Frequenz der bipolaren Ansteuerung andererseits so groß gewählt, dass die Magnetkraft einen von der Ventilausführung, insbesondere von der Federkraft der Rückstellfeder, abhängigen Grenzwert nicht überschreitet, so dass keine mechanische Reaktion des Magnetventils erfolgt. Die Ansteuerfrequenz für das induktive Heizen gemäß der vorliegenden Erfindung kann bei der Verwendung von heute üblichen Magnetventilen beispielsweise im Bereich von 0,1kHz bis 2,0kHz liegen.

Eine Variante des oben beschriebenen Heizbetriebs besteht darin, dass man eine mechanische Reaktion, d.h. ein Schalten, des Magnetventils akzeptiert. In diesem Fall kann die Frequenz der bipolaren Ansteuerung alleine im Hinblick auf die maximale induktive Heizleistung gewählt werden. In einer weiteren Heizbetriebsart können die beiden oben beschriebenen Heizbetriebsarten so kombiniert werden, dass in Abhängigkeit von einem aktuellen Betriebszustand des Fahrzeugs zwischen den beiden oben beschriebenen Heizbetriebsarten "ohne mechanische Ventilreaktion" oder "mit mechanischer Ventilreaktion" umgeschaltet wird und so die jeweiligen Vorteile kombiniert werden können. So kann beispielsweise während einer Zeitdauer, in welcher die Feststellbremse aktiviert ist, oder während eines Betriebszustandes mit erhöhten Motorgeräuschen die Betriebsart "mit mechanischer Ventilreaktion" gewählt werden, und in Betriebszuständen, bei denen keine mechanische Ventilreaktion gewünscht ist, kann durch Wahl einer erhöhten Frequenz der bipolaren Ansteuerung in die Heizbetriebsart "ohne mechanische Ventilreaktion" umgeschaltet werden.

Ausführungsformen der vorliegenden Erfindung stellen ein Verfahren zum Heizen eines Magnetventils für ein Fahrzeugbremssystem mit einer Magnetbaugruppe, welche einen Wicklungsträger, eine Spulenwicklung, ein Gehäuse und eine Abdeckscheibe umfasst, und einer Ventilpatrone zur Verfügung, welche eine Kapsel, einen mit der Kapsel verbundenen Ventileinsatz, einen innerhalb der Kapsel zwischen einer Geschlossenposition und einer Offenposition axial beweglich geführten Anker mit einem Schließelement und einen mit der Kapsel verbundenen Ventileinsatz mit einem Ventilsitz umfasst. Das Schließelement und der Ventilsitz bilden ein Ventil aus, welches einen Fluidfluss durch die Ventilpatrone einstellt. Hierbei bildet die auf den Wicklungsträger aufgebrachte Spulenwicklung der Magnetbaugruppe eine elektrische Spule aus, welche über an elektrische Anschlüsse angelegte Steuersignale ansteuerbar ist und eine Magnetkraft erzeugt, welche den Anker gegen die Kraft einer Rückstellfeder bewegt. In einem Heizbetrieb ist die Fluidtemperatur innerhalb der Ventilpatrone basierend auf den Steuersignalen veränderbar. Erfindungsgemäß sind die Steuersignale als bipolare Wechselsignale mit einer vorgegebenen Frequenz an die Spulenwicklung angelegt und erzeugen im Eisenkreis des Magnetventils und in der Kapsel Wirbelströme, welche das in der Ventilpatrone vorhandene Fluid erhitzen.

Durch die in den abhängigen Ansprüchen aufgeführten Maßnahmen und Weiterbildungen sind vorteilhafte Verbesserungen des im unabhängigen Patentanspruch 1 angegebenen Verfahrens zum Heizen eines Magnetventils für ein Fahrzeugbremssystem möglich.

In vorteilhafter Ausgestaltung des erfindungsgemäßen Verfahrens zum Heizen eines Magnetventils kann der Eisenkreis des Magnetventils den Anker, das Gehäuse und die Abdeckscheibe umfassen.

Besonders vorteilhaft ist, dass die Spulenwicklung im Brückenzweig einer H-Brückenschaltung angeordnet werden kann, welche vier Schalttransistoren umfasst. Die elektronische H-Brückenschaltung wird auch als Vierquadrantensteller bezeichnet und umfasst bekanntermaßen vier Schalttransistoren, welche beispielsweise jeweils als Feldeffekttransistor (FET) mit einer integrierten Freilaufdiode in Sperrpolung ausgeführt sind.

In weiterer vorteilhafter Ausgestaltung des erfindungsgemäßen Verfahrens zum Heizen eines Magnetventils kann der Heizbetrieb der Magnetbaugruppe mindestens zwei Heizmodi umfassen, welche jeweils einen vorgegebenen Frequenzbereich für die bipolaren Wechselsignale aufweisen. In einem ersten Heizmodus kann die Frequenz des bipolaren Wechselsignals aus einem ersten Frequenzbereich so vorgegeben werden, dass keine Ventilreaktion auf die angelegten Steuersignale erfolgt. Der erste Frequenzbereich umfasst vorzugsweise Frequenzen im Bereich von ca. 0,1kHz bis 2,0kHz. In einem zweiten Heizmodus kann die Frequenz des bipolaren Wechselsignals aus einem zweiten Frequenzbereich so vorgegeben werden, dass eine maximale induktive Heizleistung erzielt werden kann. Der zweite Frequenzbereich umfasst vorzugsweise Frequenzen im Bereich von ca. 2,1kHz bis 3,0kHz.

In weiterer vorteilhafter Ausgestaltung des erfindungsgemäßen Verfahrens zum Heizen eines Magnetventils kann in einem dritten Heizmodus in Abhängigkeit vom Betriebszustand des Fahrzeugs zwischen dem ersten Heizmodus und dem zweiten Heizmodus umgeschaltet werden, wobei die aktuelle Frequenz des bipolaren Wechselsignals von der verfügbaren Bordnetzspannung abhängig ist. So kann beispielsweise die für jede Spannungslage optimale Frequenz in Form einer Kennlinie gespeichert werden. Die Kennlinie kann beispielsweise im Steuergerät des Fahrzeugbremssystems abgelegt werden.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen
Fig. 1 zeigt eine schematische Schnittdarstellung eines Ausschnitts eines Ausführungsbeispiels eines beheizbaren Magnetventils für ein Fahrzeugbremssystem.
Fig. 2 zeigt ein schematisches Schaltbild einer elektronischen H-Brückenschaltung zur Ansteuerung des beheizbaren Magnetventils für ein Fahrzeugbremssystem aus Fig. 1.

### Ausführungsformen der Erfindung

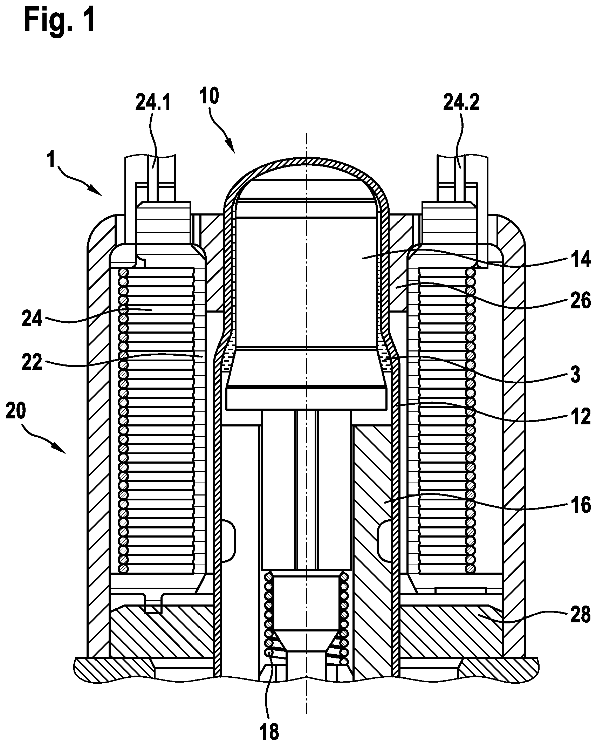

Wie aus Fig. 1 ersichtlich ist, umfasst das dargestellte Ausführungsbeispiel eines beheizbaren Magnetventils 1 für ein Fahrzeugbremssystem eine Ventilpatrone 10 und eine Magnetbaugruppe 20. Die Ventilpatrone 10 umfasst eine Kapsel 12, einen mit der Kapsel 12 verbundenen Ventileinsatz 16, einen innerhalb der Kapsel 12 zwischen einer Geschlossenposition und einer Offenposition axial beweglich geführten Anker 14, welcher ein nicht näher dargestelltes Schließelement aufweist, und einen mit der Kapsel 12 verbundenen Ventileinsatz 16, welcher einen nicht näher dargestellten Ventilsitz umfasst. Das Schließelement und der Ventilsitz bilden ein Ventil aus, welches einen Fluidfluss durch die Ventilpatrone 10 einstellt. Die Magnetbaugruppe 20 umfasst einen Wicklungsträger 22, eine auf den Wicklungsträger 22 aufgebrachte Spulenwicklung 24, ein Gehäuse 26 und eine Abdeckscheibe 28, welche das Gehäuse 26 nach unten abschließt. Die Magnetbaugruppe 20 ist mit dem Gehäuse 26 und der Abdeckscheibe 28 auf den oberen Teil der Kapsel 12 der Ventilpatrone 10 aufgeschoben. Die auf den Wicklungsträger 22 gewickelte Spulenwicklung 24 der Magnetbaugruppe 20 bildet eine elektrische Spule aus, welche über an elektrische Anschlüsse 24.1, 24.2 angelegte Steuersignale ansteuerbar ist und eine Magnetkraft erzeugt, welche den Anker 14 gegen die Kraft einer Rückstellfeder 18 bewegt. In einem Heizbetrieb kann die Fluidtemperatur innerhalb der Ventilpatrone 10 basierend auf den Steuersignalen verändert, vorzugsweise erhöht werden. Erfindungsgemäß sind die Steuersignale als bipolare Wechselsignale mit einer vorgegebenen Frequenz an die Spulenwicklung 24 angelegt und erzeugen im Eisenkreis des Magnetventils 1 und in der Kapsel 12 Wirbelströme, welche das in der Ventilpatrone 10 vorhandene Fluid 3 erhitzen.

Ausführungsformen des beheizbaren Magnetventils können beispielsweise in einem Antiblockiersystem (ABS) oder einem Antriebsschlupfregelsystem (ASR-System) oder einem elektronischen Stabilitätsprogrammsystem (ESP-System) eingesetzt werden. Im dargestellten Ausführungsbeispiel ist das beheizbaren Magnetventil 1 beispielhaft als stromlos offenes Regelventil ausgeführt, welches bei bestimmten Anforderungen in einem QS-Betrieb (= Quasi-Schalt-Betrieb) betrieben werden kann, in welchem es möglichst schnell von der Geschlossenposition in die Offenposition gebracht werden kann. Alternativ kann das beheizbaren Magnetventil 1 als stromlos geschlossenes Regelventil ausgeführt werden, welches bei bestimmten Anforderungen in einem QS-Betrieb (= Quasi-Schalt-Betrieb) betrieben werden kann, in welchem es möglichst schnell von der Geschlossenposition in die Offenposition gebracht werden kann. Des Weiteren können Ausführungsformen des beheizbaren Magnetventils 1 für ein Fahrzeugbremssystem in einer entsprechenden Aufnahmebohrung eines nicht dargestellten Fluidblocks verstemmt werden.

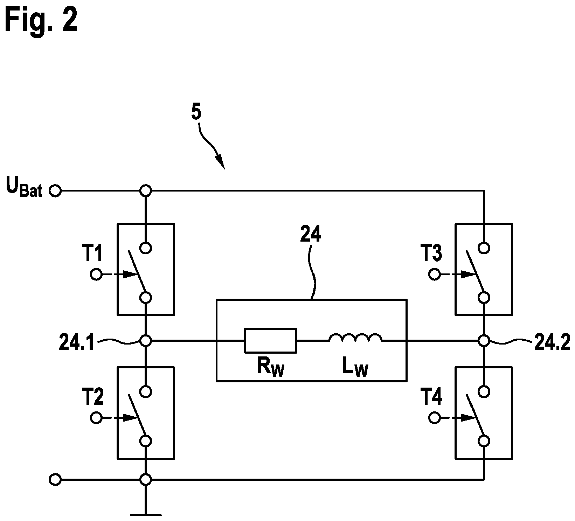

Wie aus Fig. 2 ersichtlich ist, ist die Spulenwicklung 24 im Brückenzweig einer H-Brückenschaltung 5 angeordnet, welche vier Schalttransistoren T1, T2, T3, T4 umfasst. Fig. 2 zeigt das Ersatzschaltbild der Spulenwicklung 24 mit einer Induktivität L_{W} und einem ohmschen Widerstand R_{W}.

Wie aus Fig. 1 weiter ersichtlich ist, umfasst der Eisenkreis des Magnetventils 1 den Anker 14, das Gehäuse 26 und die Abdeckscheibe 28 der Magnetbaugruppe 20. Im dargestellten Ausführungsbeispiel umfasst der Heizbetrieb der Magnetbaugruppe 10 drei verschiedene Heizmodi, welche jeweils einen vorgegebenen Frequenzbereich für die bipolaren Wechselsignale aufweisen. In einem ersten Heizmodus ist die Frequenz des bipolaren Wechselsignals aus einem ersten Frequenzbereich so vorgegeben, dass keine Ventilreaktion auf die angelegten Steuersignale erfolgt. Der erste Frequenzbereich umfasst beispielsweise Frequenzen im Bereich von ca. 0,1kHz bis 2,0kHz. In einem zweiten Heizmodus ist die Frequenz des bipolaren Wechselsignals aus einem zweiten Frequenzbereich so vorgegeben, dass eine maximale induktive Heizleistung erzielbar ist. Der zweite Frequenzbereich umfasst beispielsweise Frequenzen im Bereich von ca. 2,1kHz bis 3,0kHz. In einem dritten Heizmodus wird in Abhängigkeit vom Betriebszustand des Fahrzeugs zwischen dem ersten Heizmodus und dem zweiten Heizmodus umgeschaltet, wobei die aktuelle Frequenz des bipolaren Wechselsignals von der verfügbaren Bordnetzspannung abhängig ist. Die für jede Spannungslage optimale Frequenz ist vorzugsweise in Form einer Kennlinie im Steuergerät des Fahrzeugbremssystems gespeichert.

Ausführungsformen der vorliegenden Erfindung stellen ein Verfahren zum Heizen eines Magnetventils für ein Fahrzeugbremssystem und ein korrespondierendes Fahrzeugbremssystem mit mindestens einem solchen beheizbaren Magnetventil zur Verfügung, dessen Heizleistung zu einem erheblichen Anteil durch elektrische Induktion und einhergehende Wirbelströme direkt im Eisenkreis des Magnetventils und nicht wie im Stand der Technik ausschließlich durch ohmsche Verluste in der Spulenwicklung erzeugt wird.

## Patentansprüche

1. Verfahren zum Heizen eines Magnetventils (1) für ein Fahrzeugbremssystem, welches eine Magnetbaugruppe (20), welche einen Wicklungsträger (22), eine Spulenwicklung (24), ein Gehäuse (26) und eine Abdeckscheibe (28) umfasst, und eine Ventilpatrone (10) umfasst, welche eine Kapsel (12), einen mit der Kapsel (12) verbundenen Ventileinsatz (16), einen innerhalb der Kapsel (12) zwischen einer Geschlossenposition und einer Offenposition axial beweglich geführten Anker (14) mit einem Schließelement und einen mit der Kapsel (12) verbundenen Ventileinsatz (16) mit einem Ventilsitz umfasst, wobei das Schließelement und der Ventilsitz ein Ventil ausbilden, welches einen Fluidfluss durch die Ventilpatrone (10) einstellt, wobei die auf den Wicklungsträger (22) aufgebrachte Spulenwicklung (24) der Magnetbaugruppe (20) eine elektrische Spule ausbildet, welche über an elektrische Anschlüsse (24.1, 24.2) angelegte Steuersignale ansteuerbar ist und eine Magnetkraft erzeugt, welche den Anker (14) gegen die Kraft einer Rückstellfeder (18) bewegt, wobei in einem Heizbetrieb basierend auf den Steuersignalen die Fluidtemperatur innerhalb der Ventilpatrone (10) veränderbar ist, **dadurch gekennzeichnet, dass** die Steuersignale als bipolare Wechselsignale mit einer vorgegebenen Frequenz an die Spulenwicklung (24) angelegt sind und im Eisenkreis des Magnetventils (1) und in der Kapsel (12) Wirbelströme erzeugen, welche das in der Ventilpatrone (10) vorhandene Fluid (3) erhitzen.

2. Verfahren zum Heizen eines Magnetventils (1) nach Anspruch 1, **dadurch gekennzeichnet, dass** der Eisenkreis des Magnetventils (1) den Anker (14), das Gehäuse (26) und die Abdeckscheibe (28) umfasst.

3. Verfahren zum Heizen eines Magnetventils (1) nach Anspruch 1 oder 2, **dadurch gekennzeichnet, dass** die Spulenwicklung (24) im Brückenzweig einer H-Brückenschaltung (5) angeordnet ist, welche vier Schalttransistoren (T1, T2, T3, T4) umfasst.

4. Verfahren zum Heizen eines Magnetventils (1) nach einem der Ansprüche 1 bis 3, **dadurch gekennzeichnet, dass** der Heizbetrieb der Magnetbaugruppe (10) mindestens zwei Heizmodi umfasst, welche jeweils einen vorgegebenen Frequenzbereich für die bipolaren Wechselsignale aufweisen.

5. Verfahren zum Heizen eines Magnetventils (1) nach Anspruch 4, **dadurch gekennzeichnet, dass** in einem ersten Heizmodus die Frequenz des bipolaren Wechselsignals aus einem ersten Frequenzbereich so vorgegeben ist, dass keine Ventilreaktion auf die angelegten Steuersignale erfolgt.

6. Verfahren zum Heizen eines Magnetventils (1) nach Anspruch 5, **dadurch gekennzeichnet, dass** der erste Frequenzbereich Frequenzen im Bereich von ca. 0,1kHz bis 2,0kHz umfasst.

7. Verfahren zum Heizen eines Magnetventils (1) nach einem der Ansprüche 4 bis 6, **dadurch gekennzeichnet, dass** in einem zweiten Heizmodus die Frequenz des bipolaren Wechselsignals aus einem zweiten Frequenzbereich so vorgegeben ist, dass eine Ventilreaktion auf die angelegten Steuersignale erfolgt.

8. Verfahren zum Heizen eines Magnetventils (1) nach Anspruch 7, **dadurch gekennzeichnet, dass** der zweite Frequenzbereich Frequenzen im Bereich von ca. 2,1kHz bis 3,0kHz umfasst.

9. Verfahren zum Heizen eines Magnetventils (1) nach Anspruch 7 oder 8, **dadurch gekennzeichnet, dass** in einem dritten Heizmodus in Abhängigkeit vom Betriebszustand des Fahrzeugs zwischen dem ersten Heizmodus und dem zweiten Heizmodus umgeschaltet wird, wobei die aktuelle Frequenz des bipolaren Wechselsignals von der verfügbaren Bordnetzspannung abhängig ist.

10. Fahrzeugbremssystem mit einem Steuergerät und mindestens einem Magnetventil (1), **dadurch gekennzeichnet, dass** das mindestens eine Magnetventil (1) mit dem Verfahren nach einem der Ansprüche 1 bis 9 beheizt wird.

11. Fahrzeugbremssystem nach Anspruch 10, **dadurch gekennzeichnet, dass** die für jede Spannungslage optimale Frequenz in Form einer Kennlinie im Steuergerät gespeichert ist.

## Claims

1. Method for heating a solenoid valve (1) for a vehicle braking system, said solenoid valve comprising a magnet assembly (20) that comprises a winding support (22), a coil winding (24), a housing (26) and a cover disc (28), and said solenoid valve comprising a valve cartridge (10) that comprises a capsule (12), a valve insert (16) that is connected to the capsule (12), an armature (14) that is guided within the capsule (12) in an axially movable manner between a closed position and an open position, said armature comprising a closing element, and said valve cartridge comprises a valve insert (16) that is connected to the capsule (12) and comprises a valve seat, wherein the closing element and the valve seat form a valve that controls a fluid flow through the valve cartridge (10), wherein the coil winding (24) that is part of the magnet assembly (20) and is wound on the winding support (22) forms an electric coil that can be controlled by way of control signals that are applied to electrical connectors (24.1, 24.2) and said electric coil generates a magnetic force that moves the armature (14) against the force of a return spring (18), wherein in a heating operation it is possible based on the control signals to change the fluid temperature within the valve cartridge (10), **characterized in that** the control signals are applied to the coil winding (24) as bipolar AC signals having a predetermined frequency and generate eddy currents in the iron circuit of the solenoid valve (1) and in the capsule (12), and said eddy currents heat up the fluid (3) that is present in the valve cartridge (10).

2. Method for heating a solenoid valve (1) according to Claim 1, **characterized in that** the iron circuit of the solenoid valve (1) comprises the armature (14), the housing (26) and the cover disc (28).

3. Method for heating a solenoid valve (1) according to Claim 1 or 2, **characterized in that** the coil winding (24) is arranged in the bridge branch of an H-bridge circuit (5) that comprises four switching transistors (T1, T2, T3, T4).

4. Method for heating a solenoid valve (1) according to any one of Claims 1 to 3, **characterized in that** the heating operation of the magnet assembly (10) includes at least two heating modes that comprise in each case a predetermined frequency range for the bipolar AC signals.

5. Method for heating a solenoid valve (1) according to Claim 4, **characterized in that** in a first heating mode the frequency of the bipolar AC signal is predetermined from a first frequency range so that the valve does not react to the applied control signals.

6. Method for heating a solenoid valve (1) according to Claim 5, **characterized in that** the first frequency range includes frequencies in the range of ca. 0.1kHz to 2.0kHz.

7. Method for heating a solenoid valve (1) according to any one of Claims 4 to 6, **characterized in that** in a second heating mode, the frequency of the bipolar AC signal is predetermined from a second frequency range so that a valve reaction to the applied control signals takes place.

8. Method for heating a solenoid valve (1) according to Claim 7, **characterized in that** the second frequency range includes frequencies in the range of ca. 2.1kHz to 3.0kHz.

9. Method for heating a solenoid valve (1) according to Claim 7 or 8, **characterized in that** in a third heating mode, the heating mode is switched between the first heating mode and the second heating mode in dependence upon the operating state of the vehicle, wherein the prevailing frequency of the bipolar AC signal is dependent upon the available onboard network voltage.

10. Vehicle braking system having a control apparatus and at least one solenoid valve (1), **characterized in that** the at least one solenoid valve (1) is heated by the method according to any one of Claims 1 to 9.

11. Vehicle braking system according to Claim 10, **characterized in that** the optimal frequency for each voltage position is stored in the control apparatus in the form of a characteristic curve.

## Revendications

1. Procédé de chauffage d'une électrovanne (1) pour un système de freinage d'un véhicule, qui comprend un module magnétique (20), qui comprend un support d'enroulement (22), un enroulement de bobine (24), un boîtier (26) et un disque de recouvrement (28), et une cartouche de soupape (10), qui comprend une capsule (12), un insert de soupape (16) assemblé à la capsule (12), un induit (14) guidé en mouvement axial entre une position fermée et une position ouverte avec un élément de fermeture à l'intérieur de la capsule (12) et un insert de soupape (16) assemblé à la capsule (12) avec un siège de soupape, dans lequel l'élément de fermeture et le siège de soupape forment une soupape, qui règle un flux de fluide à travers la cartouche de soupape (10), dans lequel l'enroulement de bobine (24) du module magnétique (20) installé sur le support d'enroulement (22) forme une bobine électrique, qui peut être commandée par des signaux de commande appliqués à des bornes électriques (24.1, 24.2) et qui produit une force magnétique, qui déplace l'induit (14) contre la force d'un ressort de rappel (18), dans lequel la température du fluide à l'intérieur de la cartouche de soupape (10) peut être modifiée dans un fonctionnement de chauffage sur la base des signaux de commande, **caractérisé en ce que** les signaux de commande sont appliqués à l'enroulement de bobine (24) sous forme de signaux alternatifs bipolaires avec une fréquence prédéterminée et produisent dans le circuit ferreux de l'électrovanne (1) et dans la capsule (12) des courants induits, qui échauffent le fluide (3) présent dans la cartouche de soupape (10).

2. Procédé de chauffage d'une électrovanne (1) selon la revendication 1, **caractérisé en ce que** le circuit ferreux de l'électrovanne (1) comprend l'induit (14), le boîtier (26) et le disque de recouvrement (28).

3. Procédé de chauffage d'une électrovanne (1) selon la revendication 1 ou 2, **caractérisé en ce que** l'enroulement de bobine (24) est disposé dans la branche de pont d'un circuit de pont en H (5), qui comprend quatre transistors de commutation (T1, T2, T3, T4).

4. Procédé de chauffage d'une électrovanne (1) selon l'une quelconque des revendications 1 à 3, **caractérisé en ce que** le fonctionnement de chauffage du module magnétique (10) comprend au moins deux modes de chauffage, qui présentent respectivement une plage de fréquence prédéterminée pour les signaux alternatifs bipolaires.

5. Procédé de chauffage d'une électrovanne (1) selon la revendication 4, **caractérisé en ce que** dans un premier mode de chauffage la fréquence du signal alternatif bipolaire est prédéterminée à partir d'une première plage de fréquence, de telle manière qu'il ne se produise pas de réaction de la soupape aux signaux de commande appliqués.

6. Procédé de chauffage d'une électrovanne (1) selon la revendication 5, **caractérisé en ce que** la première plage de fréquence comprend des fréquences dans la plage d'environ 0,1 kHz à 2,0 kHz.

7. Procédé de chauffage d'une électrovanne (1) selon l'une quelconque des revendications 4 à 6, **caractérisé en ce que** dans un deuxième mode de chauffage la fréquence du signal alternatif bipolaire est prédéterminée à partir d'une seconde plage de fréquence, de telle manière qu'il se produise une réaction de la soupape aux signaux de commande appliqués.

8. Procédé de chauffage d'une électrovanne (1) selon la revendication 7, **caractérisé en ce que** la seconde plage de fréquence comprend des fréquences dans la plage d'environ 2,1 kHz à 3,0 kHz.

9. Procédé de chauffage d'une électrovanne (1) selon la revendication 7 ou 8, **caractérisé en ce que** dans un troisième mode de chauffage on commute entre le premier mode de chauffage et le deuxième mode de chauffage en fonction de l'état de fonctionnement du véhicule, dans lequel la fréquence actuelle du signal alternatif bipolaire dépend de la tension de réseau de bord disponible.

10. Système de freinage d'un véhicule avec un appareil de commande et au moins une électrovanne (1), **caractérisé en ce que** ladite au moins une électrovanne (1) est chauffée avec le procédé selon l'une quelconque des revendications 1 à 9.

11. Système de freinage d'un véhicule selon la revendication 10, **caractérisé en ce que** l'on mémorise la fréquence optimale pour chaque couche de tension sous la forme d'une courbe caractéristique dans l'appareil de commande.
